# EUROPEAN PATENT SPECIFICATION

(11) **EP 4 653 737 B1**
(45) Date of publication and mention of the grant of the patent: **09.12.2026**
(21) Application number: 24177989.1
(22) Date of filing: 24.05.2024
(51) Int. Cl.: F16L 59/14, F02K 9/60, F16L 9/18, F16L 23/12, F16L 47/14, F16L 59/18, F16L 59/147

(54) **PIPE FOR A CRYOGENIC FLUID, PIPE ASSEMBLY, AND AEROSPACE SYSTEM WITH PIPE**
ROHR FÜR EIN KRYOGENES FLUID, ROHRANORDNUNG UND LUFT- UND RAUMFAHRTSYSTEM MIT ROHR
TUYAU POUR FLUIDE CRYOGÉNIQUE, ENSEMBLE TUYAU ET SYSTÈME AÉROSPATIAL AVEC TUYAU

(43) Date of publication of application: 26.11.2025
(73) Proprietor: ArianeGroup GmbH, 82024 Taufkirchen (DE)
(72) Inventor: Gerding, Patrick, 28199 Bremen (DE); Quatmann, Michael, 28199 Bremen (DE); Dannemann, Bastian, 28199 Bremen (DE)
(74) Representative: Marschall, Stefan

(56) References cited:
- EP-A1- 4 345 353
- CN-A- 117 869 113
- US-A- 5 944 060
- US-A1- 2008 169 037
- US-A1- 2010 024 911
- US-A1- 2016 245 452

## Description

In aerospace systems, liquids and gases are typically transported, e.g., from a respective reservoir to a respective point of use, by using rigid or flexible lines comprising one or various pipes. Conventionally, these pipelines form part of the so-called "secondary" structure, which is not used to support structural loads during operation, but is needed to fulfil certain secondary functions. The pipes are usually made of a metal alloy and are attached to the adjacent load-bearing, so-called "primary" structure by means of brackets.

New systems such as the FLINT system (Fluid Line Integrated Thrustframe) achieve mass savings by consistently integrating the secondary structure into the primary structure, such that existing mass is used to accomplish several functions. In particular, by using intermediate struts, rigid pipes may be combined into trusses and thereby be used as structural elements for load transfer.

However, if cryogenic media, such as liquid hydrogen, are transported, a significant cooling of the pipes occurs during operation. This change in temperature between the state of assembling on the one hand and operating states on the other hand leads to large, material-dependent changes in length. In order to still securely connect the pipes to the primary structure of the respective aircraft or spacecraft, compensators are traditionally used to compensate for the deformations between respective attachment points.

Furthermore, the use of cryogenic fluids requires thermal insulation of the lines in order to limit heat flow into the media which otherwise might be mission critical due to bubble formation resulting from excessive heat input. There are various options for insulation, such as using double-walled pipes with evacuated spaces (vacuum insulation), or utilising insulation foams which may be sprayed onto the pipe, attached to the outside as half-shells, or wrapped about a tube in the form of flexible mats. As a further possibility, multi-layer insulation (MLI) films may also be used for insulation the tubes. Insulating the respective fastening points, however, is difficult because a conductive connection is necessarily created between the holder and the tube. Therefore, the maximum number of attachment points on a pipeline is limited by the respective maximum allowable heat flow.

The above mentioned dual use of the pipes by integration thereof into the primary system is adverse to the utilisation of structural elements to compensate for the changes in length. For the structural use of pipes a high stiffness and stability is required, which is opposite to compensation functions. In addition, said dual use entails an increased number of connection points and, thereby, an augmented heat flow into the pipes. The design of a structural integrated system architecture with classical pipes made from materials with significant thermal expansion is therefore a challenging task.

Document CN 117869113 A discloses a cryogenic propellant transfer structure for a launch vehicle. An upper tank and a lower tank are structurally connected by a fork-shaped ring, while a transfer pipe extends between respective flanges of the tanks to convey cryogenic propellant. The transfer pipe comprises an inner tube and an outer tube defining a vacuum insulation layer therebetween. Expansion joints are provided in the inner and outer tubes to compensate for thermal contraction and deformation caused by tank pressurisation.

Documents US 5 944 060 A, US 2008/169037 A1, US 2016/245452 A1, EP 4 345 353 A1 and US 2010/024911 A1 disclose pipes of the prior art.

It is an object of the present invention to provide an improved pipe and pipe assembly for conduction of a cryogenic fluid. It is a further object of the present invention to provide an improved aerospace system employing cryogenic fluid.

The object is achieved by an aerospace system according to claim 1.

Advantageous embodiments are disclosed in the dependent claims, the description and the figures.

A pipe as comprised in the aerospace system of the present invention is devised to conduct a cryogenic fluid such as liquid hydrogen. The pipe comprises a rigid outer tube at least partially made of a fibre-reinforced polymer; the reinforcing fibres may in particular comprise carbon fibres and/or glass fibres. The pipe further comprises a gas-proof inner tube running within the outer tube with an (thermal) insulation layer in-between. The (preferably passive) insulation layer may in particular comprise a rigid foam and/or a multilayer insulation, for instance. At at least one end of the inner tube, a (respective) flange is formed which connects the inner tube with the outer tube.

Due to its inventive construction, the pipe facilitates a weight-saving utilisation as a part of a primary structure of a respective system, in particular of an aerospace system. Therein, the outer tube serves to transfer the majority of structural loads, and the inner tube is configured to conduct the cryogenic fluid and to ensure impermeability to gas. As the insulation layer is inside the outer tube, its insulating properties are affected, if at all, at most insignificantly by ambient gases such as helium. In particular, the pipe is thermally stabilised.

Moreover, as a change of temperature of the outer tube during utilisation of the pipe (i.e., when a flow of a cryogenic fluid is piped through) is efficiently reduced by the insulation layer, the outer tube can be mounted and/or combined with further structures (e.g., to at least one secondary structure) by fixation means, which may be attached to the outer tube without noteworthy impact to a heat flow into the conducted fluid. Indeed, according to advantageous embodiments, the pipe comprises one or various fixation means for combining the pipe with a further structure. The fixation means may respectively fastened to or integrally (monolithically) shaped with the outer tube.

The pipe may in particular be configured to be mounted in an aerospace system such as a launcher or a launcher stage.

The inner tube may preferably have a coefficient of thermal expansion, measured between 20°C and 90°C, which is at most 2.5 × 10⁻⁶ K⁻¹ or at most 2 × 10⁻⁶ K⁻¹. It may be at least partially made of a metal alloy, such as a ferrous alloy, in particular a nickel-iron alloy (such as FeNi36), or of a composite material such as a fibre-reinforced plastic (wherein the reinforcing fibres may in particular comprise carbon fibres). Thereby, changes in length of the inner tube are minimised, i.e., no large structural shrinkage is induced, such that compensators conventionally adjusting such changes are unnecessary. A (mean) wall thickness of the inner tube may preferably be at most 8mm or at most 5mm, for instance.

A laminate structure of the fibre-reinforced polymer of the outer tube may be different in a longitudinal centre than in at least one of its ends connected to the at least one (respective) flange. Thereby, the centre region can be adapted to requirements regarding the strength of the outer tube and/or an efficient fabrication thereof, while nevertheless a particularly low coefficient of thermal expansion can be created in the region where the outer tube contacts the flange and where therefore a cooling may occur when the cryogenic fluid is conducted through the pipe. As a consequence, a stiff mounting of the pipe and, therefore, a load-bearing function thereof is improved.

To facilitate a connection with a further pipe, one or various through holes and/or a thread is/are preferably arranged in the flange.

The at least one flange may be integrally shaped with the inner tube. Alternatively, it may be materially connected to the inner tube (such as by gluing or welding) and/or it may be tied thereto in a form-fit connection (such as by screwing). Additionally or alternatively, the at least one flange may be materially connected (for example, glued) to the outer tube and/or tied thereto in a form-fit connection. A material of the at least one flange and a material of the inner tube preferably at least partially coincide. These embodiments facilitate a particularly convenient fabrication of the pipe. To improve its connection with the flange, the outer tube may have a thickening in its material at one or both of its ends.

According to advantageous embodiments, the at least one flange comprises a segment (further referred to herein as "bracket portion") which embraces an edge margin of the insulation layer. Thereby, a durability of the layered arrangement and, thereby, of the pipe is improved. Preferably, a circumferential channel is arranged between the bracket segment and a flat contact segment of the at least one flange, which contact segment is configured to be connected to a further pipe (in particular, to a flange thereof). Such channel advantageously provides access to the contact segment and thereby simplifies the connection with another pipe, e.g. by inserting bolts in respective through holes and fastening them with nuts. To further improve a durability of the pipe, the outer tube may preferably at least partially cover the bracket segment.

According to advantageous embodiments, one or various groove/s adapted to receive at least a segment of a respective seal ring are formed in the at least one flange.

The pipe as comprised in the aerospace system of the present invention may preferably comprise one or various insulation shell/s which is/are arranged on or configured to be arranged on the at least one flange when this is connected to another pipe, in particular, to a flange thereof. Such shell even more reduces a heat flow, from an environment into the pipe, through the connection area of the pipes.

The aerospace system according to the present invention may comprise a pipe assembly with at least two pipes according to (the same or different embodiment/s of) the present invention. The pipes are connected or configured to be connected to each other at a respective flange thereof.

The aerospace system according to the present invention comprises at least one pipe as set out above.

Therein, the at least one pipe forms part of a primary structure of the aerospace system.

The aerospace system may in particular be a launcher or a stage of a multistage launcher. It may comprise at least one engine which is configured to be driven with a cryogenic propellant such as liquid hydrogen. Therein, the at least one pipe may be configured to conduct the cryogenic propellant to the engine.

In what follows, preferred embodiments of the present invention are explained with respect to the accompanying drawings. As is to be understood, the various elements and components are depicted as examples only, may be facultative and/or combined in a manner different than depicted. Reference signs for related elements are used comprehensively and not necessarily defined again for each figure.

Shown is schematically in
- Fig. 1:: a first exemplary embodiment of a pipe according to the present invention in a longitudinal section;
- Fig. 2a:: an end segment of a second exemplary embodiment of a pipe according to the present invention in a longitudinal section;
- Fig. 2b:: a flange of the pipe of Fig. 2a in a side view;
- Fig. 3:: a pipe assembly with two pipes of the embodiment illustrated in Figure 2a with an insulation shell arranged on the abutting flanges; and
- Fig. 4:: a pipe as that shown in Fig. 1 further comprising fixation means fastened to the outer tube.

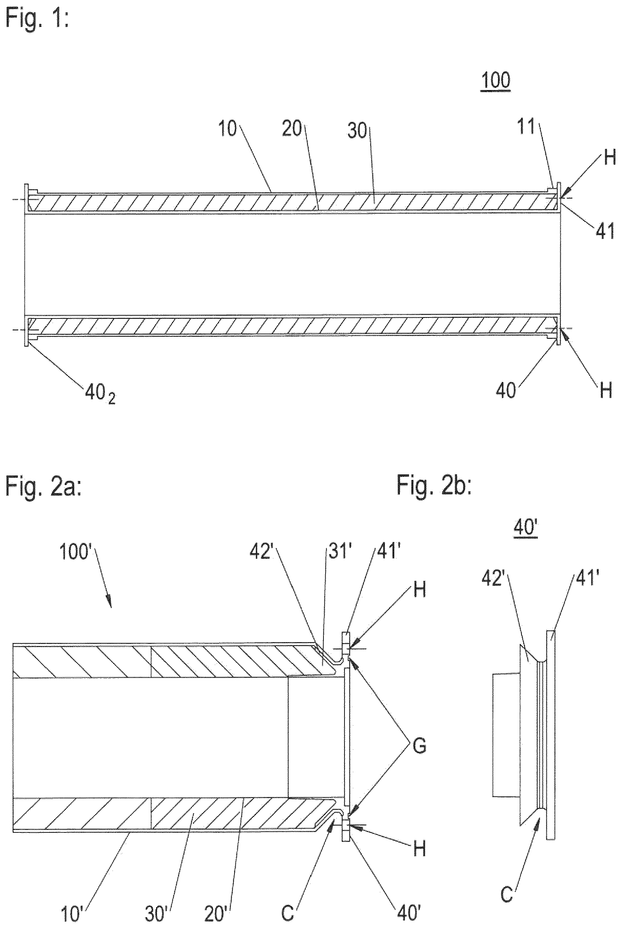

Figure 1 illustrates a pipe 100 according to a first exemplary embodiment of aerospace system of the present invention in a longitudinal section. The pipe 100 comprises a rigid (thus, stiff) outer tube 10 which is made of a fibre reinforced polymer (such as a carbon fibre reinforced polymer).

The pipe 100 further comprises a gas-proof inner tube 20 running within the outer tube 10, with an insulation layer 30 in-between.

The inner tube 20 may in particular be at least partially made of a metal alloy, such as a ferrous alloy, in particular a nickel-iron alloy such as FeNi36, or of a composite material.

The (preferably passive) insulation layer 30 may advantageously be at least partially made of a hardened (thus rigid) foam.

At both of its ends, a respective flange 40, 40₂ comprised by the pipe 100 connects the inner tube 20 with the outer tube 10. Both flanges 40, 40₂ are equally shaped; the respective details thereof are indicated, in Figure 1, with respect to flange 40 comprising a contact segment 41 configured to be connected to a further pipe (not shown in Figure 1), in particular to a corresponding flange thereof, by bolts (not shown) running through holes H in the contact segment 41, as indicated by respective dashed lines.

In the exemplary embodiment shown in Figure 1, the respective contact segment 41 of each flange 40, 40₂ is formed integrally (thus, monolithically) with the inner tube; according to alternative embodiments, the respective flange might be materially connected (e.g., welded or glued) and/or positively fit (i.e., tied in a form-fit connection) to the inner tube 20, such as by being screwed to the inner tube 20, for instance.

Moreover, the flanges 40, 40₂ of the pipe 100 depicted in Figure 1 are materially connected (e.g., glued) to the outer tube 10 at a thickened end segment 11 thereof, which thickening serves to improve the stability of the connection. According to alternative embodiments, the respective flange might be (additionally or alternatively) tied by a form-fit connection to the outer tube (not shown).

In Figure 2a, an end segment of a pipe 100' according to a further embodiment of the aerospace system of the present invention is illustrated in a sectional view; a not shown opposite end of the pipe 100' may preferably be designed equally to that depicted.

The pipe 100' comprises a rigid (thus, stiff) outer tube 10' which is made of a fibre reinforced polymer (e.g., a carbon fibre reinforced polymer), and a gas-proof inner tube 20' running within the outer tube 10', with an insulation layer 30' in-between. The inner tube 20' may in particular be at least partially made of a metal alloy, such as a ferrous alloy, in particular a nickel-iron alloy such as FeNi36, or of a composite material, in particular of a fibre-reinforced plastic, more specifically, a carbon fibre-reinforced plastic.

A flange 40' connects the inner tube 20' with the outer tube 10'; Figure 2b illustrates the flange 40' of the tube 100' alone in a side view.

As indicated in Figures 2a, 2b, the flange 40' comprises a flat contact segment 41' configured to be connected to a further pipe (not shown in said Figures), in particular to a corresponding flange thereof. An annular groove G formed in the contact segment 41' serves to receive at least a portion of a seal ring (not shown) ensuring a gas-tight connection of the pipe 100' with the further pipe.

The flange 40' further comprises a bracket segment 42' which embraces an edge margin 31' of the insulation layer 30'. The bracket segment 42' is separated from the contact segment 41' by a circumferential channel C, and it is covered by an end segment of the outer tube 10' extending into the channel C.

The thus at the end of the pipe 100' established laminate of insulation layer 30', bracket segment 42', and outer tube 10' ensures a particularly high durability of the pipe 100'. Moreover, the channel C provides access to through holes H in the contact segment 41'. As a consequence, the pipe 100' can be easily connected, in its completed state, to the further pipe by bolts (not shown) inserted into the through holes H, as indicated in Figure 2a by respective dashed lines.

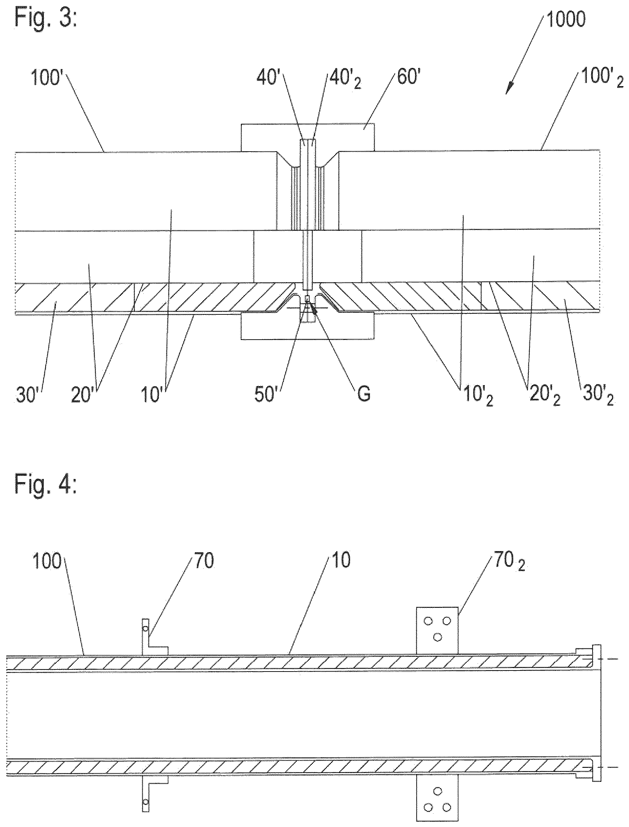

Figure 3 shows a segment of a pipe assembly 1000 according to a preferred embodiment of the aerospace system of the present invention, the pipe assembly 1000 comprising the pipe 100' depicted in Figure 2a which is connected with an equally shaped further pipe 100₂'. Therein, the upper area of Figure 3 shows a lateral view of the connection, whereas the lower area of Figure 3 provides a sectional view making visible the respective inner tubes 20', 20₂' and insulation layers 30', 30₂', as well as a seal ring 50' inserted in the respective grooves G of the abutting flanges 40', 40₂'.

Moreover, an insulation shell 60' is arranged on the connected flanges 40', 40₂'. Preferably, the insulation shell 60' is combined with at least one further insulation shell (not shown) so as to entirely encompass the connected ends of the pipes 100', 100₂', thereby further reducing a heat flow from an environment into a fluid (not shown) running through the connected pipes 100', 100₂'.

In Figure 4, an end segment of the pipe 100 illustrated in Figure 1 is depicted, wherein fixation means 70, 70₂ are fastened to the outer tube 10. The fixation means may serve to mount the pipe 100 in a respective structure (not shown) such as an aerospace system and/or to fasten a secondary structure to the pipe 100 (not shown).

Disclosed is a pipe 100, 100', 100₂' for conducting a cryogenic fluid. The pipe comprises a rigid outer tube 10, 10', 10₂' at least partially made of a fibre-reinforced polymer, a gas-proof inner tube 20, 20', 20₂' running within the outer tube 10, 10', 10₂', an insulation layer 30, 30', 30₂' arranged between the inner tube 20, 20', 20₂' and the outer tube 10, 10', 10₂', and at least one flange 40, 40', 40₂' formed at a respective end of the inner tube 20, 20', 20₂'. The at least one flange 40, 40', 40₂' connects the inner tube 20, 20', 20₂' with the outer tube 10, 10', 10₂'.

Further disclosed are a pipe assembly 1000 comprising at least two such pipes 100, 100', 100₂' which are connected or configured to be connected at a respective flange 40, 40', 40₂' thereof, and an aerospace system comprising at least one such pipe 100, 100', 100₂'.

### Reference signs

- 10, 10', 10₂': outer tube
- 20, 20', 20₂': inner tube
- 30, 30', 30₂': insulation layer
- 31': edge margin of insulation layer
- 40, 40', 40₂': flange
- 41, 41': contact segment of flange
- 42': bracket segment of flange
- 50': seal ring
- 60': insulation shell

- 100, 100', 100₂': pipe

- 1000: pipe assembly

- C: channel
- G: groove
- H: through hole

## Claims

1. Aerospace system comprising at least one pipe (100, 100', 100₂') for conducting a cryogenic fluid, the at least one pipe forming part of a primary structure of the aerospace system and comprising
- a rigid outer tube (10, 10', 10₂') at least partially made of a fibre-reinforced polymer,
- a gas-proof inner tube (20, 20', 20₂') running within the outer tube (10, 10', 10₂'),
- an insulation layer (30, 30', 30₂') arranged between the inner tube (20, 20', 20₂') and the outer tube (10, 10', 10₂'), and
- at least one flange (40, 40', 40₂') formed at a respective end of the inner tube (20, 20', 20₂'), the at least one flange (40, 40', 40₂') connecting the inner tube (20, 20', 20₂') with the outer tube (10, 10', 10₂').

2. Aerospace system according to claim 1, wherein the at least one flange (40, 40') is
- integrally shaped with the inner tube (20) or materially connected to the inner tube (20') and/or tied thereto in a form-fit connection, and/or
- materially connected to the outer tube (10, 10') and/or tied thereto in a form-fit connection.

3. Aerospace system according to one of claims 1 or 2, wherein a material of the at least one flange (40, 40') and a material of the inner tube (20, 20') at least partially coincide.

4. Aerospace system according to one of the preceding claims,
wherein the inner tube (20, 20')
- has a wall thickness of at most 8mm or at most 5mm,
- has a coefficient of thermal expansion, measured between 20°C and 90°C, which is at most 2.5 × 10⁻⁶ K⁻¹ or at most 2 × 10⁻⁶ K⁻¹ and/or
- is at least partially made of a metal alloy, such as a ferrous alloy, in particular a nickel-iron alloy, or of a composite material, in particular carbon fibre-reinforced plastic.

5. Aerospace system according to one of the preceding claims,
wherein the at least one flange (40, 40') comprises a bracket segment (42') embracing an edge (31') of the insulation layer (30').

6. Aerospace system according to claim 5, wherein the bracket segment (42') is separated, by a circumferential channel (C), from a flat contact segment (41') of the at least one flange (40'), which contact segment (41') is configured to be connected to a further pipe (100₂').

7. Aerospace system according to one of claims 5 or 6, wherein the outer tube (10') covers at least a segment of the bracket segment (42').

8. Aerospace system according to one of the preceding claims,
wherein the insulation layer (30, 30') at least partially consists of a rigid foam.

9. Aerospace system according to one of the preceding claims,
wherein at least one through hole (H) and/or at least one thread are/is formed in the at least one flange (40, 40') for connection thereof with another pipe (100₂').

10. Aerospace system according to one of the preceding claims,
wherein one or various groove/s (G) adapted to receive at least a portion of a respective seal ring (50') is/are formed in the at least one flange (40').

11. Aerospace system according to one of the preceding claims, the at least one pipe (100, 100', 100₂') further comprising one or various insulation shell/s (60') arranged on or configured to be arranged on the at least one flange (40, 40') when this is connected to another pipe (100₂').

12. Aerospace system according to one of the preceding claims, the at least one pipe (100, 100', 100₂') further comprising one or various fixation means (70, 70₂) for joining the pipe to a further structure, the fixation means respectively fastened to or integrally shaped with the outer tube (100).

13. Aerospace system according to one of the preceding claims, comprising a pipe assembly (1000) with at least two pipes (100', 100₂') respectively in accordance with one of the preceding claims, which are connected or configured to be connected at a respective flange (40', 40₂') thereof.

14. Aerospace system according to one of the preceding claims,
wherein the aerospace system is a launcher or a stage of a multistage launcher.

15. Aerospace system according to one of the preceding claims,
wherein the aerospace system comprises at least one engine configured to be driven with a cryogenic propellant supplied through the at least one pipe.

## Patentansprüche

1. Luft- und Raumfahrtsystem, das mindestens ein Rohr (100, 100', 100₂') zum Leiten eines kryogenen Fluids umfasst, wobei das mindestens eine Rohr einen Teil einer Primärstruktur des Luft- und Raumfahrtsystems bildet und Folgendes umfasst:
- ein starres äußeres Rohr (10, 10', 10₂'), das zumindest teilweise aus einem faserverstärkten Polymer hergestellt ist,
- ein gasdichtes inneres Rohr (20, 20', 20₂'), das innerhalb des äußeren Rohrs (10, 10', 10₂') verläuft,
- eine Isolationsschicht (30, 30', 30₂'), die zwischen dem inneren Rohr (20, 20', 20₂') und dem äußeren Rohr (10, 10', 10₂') angeordnet ist, und
- mindestens einen Flansch (40, 40', 40₂'), der an einem jeweiligen Ende des inneren Rohrs (20, 20', 20₂') ausgebildet ist, wobei der mindestens eine Flansch (40, 40', 40₂') das innere Rohr (20, 20', 20₂') mit dem äußeren Rohr (10, 10', 10₂') verbindet.

2. Luft- und Raumfahrtsystem nach Anspruch 1, wobei der mindestens eine Flansch (40, 40')
- einstückig mit dem inneren Rohr (20) geformt oder materiell mit dem inneren Rohr (20') verbunden und/oder in einer formschlüssigen Verbindung an dieses gebunden ist, und/oder
- materiell mit dem äußeren Rohr (10, 10') verbunden und/oder in einer formschlüssigen Verbindung an dieses gebunden ist.

3. Luft- und Raumfahrtsystem nach einem der Ansprüche 1 oder 2, wobei ein Material des mindestens einen Flanschs (40, 40') und ein Material des inneren Rohrs (20, 20') zumindest teilweise übereinstimmen.

4. Luft- und Raumfahrtsystem nach einem der vorhergehenden Ansprüche, wobei das innere Rohr (20, 20')
- eine Wanddicke von höchstens 8 mm oder höchstens 5 mm aufweist,
- einen Wärmeausdehnungskoeffizienten, gemessen zwischen 20 °C und 90 °C, aufweist, der höchstens 2,5 × 10⁻⁶ K⁻¹ oder höchstens 2 × 10⁻⁶ K⁻¹ beträgt, und/oder
- zumindest teilweise aus einer Metalllegierung, wie einer Eisenlegierung, insbesondere einer Nickel-Eisen-Legierung, oder aus einem Verbundwerkstoff, insbesondere kohlenstofffaserverstärktem Kunststoff, hergestellt ist.

5. Luft- und Raumfahrtsystem nach einem der vorhergehenden Ansprüche, wobei der mindestens eine Flansch (40, 40') ein Halterungssegment (42') umfasst, das eine Kante (31') der Isolationsschicht (30') umklammert.

6. Luft- und Raumfahrtsystem nach Anspruch 5, wobei das Halterungssegment (42') durch einen umlaufenden Kanal (C) von einem flachen Kontaktsegment (41') des mindestens einen Flanschs (40') getrennt ist, wobei das Kontaktsegment (41') dafür ausgelegt ist, mit einem weiteren Rohr (100₂') verbunden zu werden.

7. Luft- und Raumfahrtsystem nach einem der Ansprüche 5 oder 6, wobei das äußere Rohr (10') mindestens ein Segment des Halterungssegments (42') bedeckt.

8. Luft- und Raumfahrtsystem nach einem der vorhergehenden Ansprüche, wobei die Isolationsschicht (30, 30') zumindest teilweise aus einem Hartschaumstoff besteht.

9. Luft- und Raumfahrtsystem nach einem der vorhergehenden Ansprüche, wobei mindestens eine Durchgangsöffnung (H) und/oder mindestens ein Gewinde in dem mindestens einen Flansch (40, 40') zur Verbindung desselben mit einem anderen Rohr (100₂') ausgebildet ist/sind.

10. Luft- und Raumfahrtsystem nach einem der vorhergehenden Ansprüche, wobei eine oder mehrere Nut(en) (G), die so angepasst sind, dass sie zumindest einen Abschnitt eines jeweiligen Dichtrings (50') aufnehmen, in dem mindestens einen Flansch (40') ausgebildet ist/sind.

11. Luft- und Raumfahrtsystem nach einem der vorhergehenden Ansprüche, wobei das mindestens eine Rohr (100, 100', 100₂') ferner eine oder mehrere Isolationsummantelung(en) (60') umfasst, die an dem mindestens einen Flansch (40, 40') angeordnet ist/sind oder dafür ausgelegt ist/sind, daran angeordnet zu werden, wenn dieser mit einem anderen Rohr (100₂') verbunden ist.

12. Luft- und Raumfahrtsystem nach einem der vorhergehenden Ansprüche, wobei das mindestens eine Rohr (100, 100', 100₂') ferner eine oder mehrere Befestigungsmittel (70, 70₂') zum Zusammenfügen des Rohrs mit einer weiteren Struktur umfasst, wobei die Befestigungsmittel jeweils an dem äußeren Rohr (100) befestigt oder einstückig damit geformt sind.

13. Luft- und Raumfahrtsystem nach einem der vorhergehenden Ansprüche, das eine Rohranordnung (1000) mit mindestens zwei Rohren (100', 100₂'), jeweils nach einem der vorhergehenden Ansprüche, umfasst, die an einem jeweiligen Flansch (40', 40₂') davon verbunden sind oder dafür ausgelegt sind, an diesem verbunden zu werden.

14. Luft- und Raumfahrtsystem nach einem der vorhergehenden Ansprüche, wobei das Luft- und Raumfahrtsystem eine Trägerrakete oder eine Stufe einer Trägerrakete ist.

15. Luft- und Raumfahrtsystem nach einem der vorhergehenden Ansprüche, wobei das Luft- und Raumfahrtsystem mindestens ein Triebwerk umfasst, das dafür ausgelegt ist, mit einem kryogenen Treibstoff betrieben zu werden, der durch das mindestens eine Rohr zugeführt wird.

## Revendications

1. Système aérospatial comprenant au moins une conduite (100, 100', 100₂') pour acheminer un fluide cryogénique, la au moins une conduite faisant partie d'une structure primaire du système aérospatial et comprenant :
- un tube extérieur rigide (10, 10', 10₂') réalisé au moins partiellement en un polymère renforcé de fibres,
- un tube intérieur étanche aux gaz (20, 20', 20₂') s'étendant à l'intérieur du tube extérieur (10, 10', 10₂'),
- une couche d'isolation (30, 30', 30₂') disposée entre le tube intérieur (20, 20', 20₂') et le tube extérieur (10, 10', 10₂') et
- au moins une bride (40, 40', 40₂') formée à une extrémité respective du tube intérieur (20, 20', 20₂'), la au moins une bride (40, 40', 40₂') raccordant le tube intérieur (20, 20', 20₂') au tube extérieur (10, 10', 10₂').

2. Système aérospatial selon la revendication 1, dans lequel la au moins une bride (40, 40') est
- formée en un seul tenant avec le tube intérieur (20) ou liée par complémentarité de matière au tube intérieur (20') et/ou liée à celui-ci par une liaison par complémentarité de forme, et/ou
- liée par complémentarité de matière au tube extérieur (10, 10') et/ou liée à celui-ci par une liaison par complémentarité de forme.

3. Système aérospatial selon une des revendications 1 ou 2, dans lequel un matériau d'au moins une bride (40, 40') et un matériau du tube intérieur (20, 20') sont au moins partiellement identiques.

4. Système aérospatial selon une des revendications précédentes, dans lequel le tube intérieur (20, 20')
- présente une épaisseur de paroi d'au plus 8 mm ou d'au plus 5 mm,
- présente un coefficient de dilatation thermique, mesuré entre 20 °C et 90 °C, qui est d'au plus 2,5 x 10⁻⁶ K⁻¹ ou d'au plus 2 x 10⁻⁶ K⁻¹ et/ou
- est constitué au moins partiellement d'un alliage métallique, tel qu'un alliage ferreux, en particulier un alliage nickel-fer, ou d'un matériau composite, en particulier une matière plastique renforcée par des fibres de carbone.

5. Système aérospatial selon une des revendications précédentes, dans lequel la au moins une bride (40, 40') comprend un segment de fixation (42') enserrant un bord (31') de la couche d'isolation (30').

6. Système aérospatial selon la revendication 5, dans lequel le segment de fixation (42') est séparé, par un canal circonférentiel (C), d'un segment de contact plat (41') d'au moins une bride (40'), lequel segment de contact (41') est configuré pour être raccordé à une autre conduite (100₂').

7. Système aérospatial selon une des revendications 5 ou 6, dans lequel le tube extérieur (10') recouvre au moins un segment du segment de fixation (42').

8. Système aérospatial selon une des revendications précédentes, dans lequel la couche d'isolation (30, 30') est constituée au moins partiellement d'une mousse rigide.

9. Système aérospatial selon une des revendications précédentes, dans lequel au moins un trou traversant (H) et/ou au moins un filetage sont formés dans la au moins une bride (40, 40') pour son raccordement à une autre conduite (100₂').

10. Système aérospatial selon une des revendications précédentes, dans lequel une ou plusieurs gorges (G) adaptées pour recevoir au moins une partie d'une bague d'étanchéité respective (50') sont formées dans la au moins une bride (40').

11. Système aérospatial selon une des revendications précédentes, le au moins un tuyau (100, 100', 100₂') comprenant en outre une ou plusieurs coquilles d'isolation (60') disposées sur, ou configurées pour être disposées sur, la au moins une bride (40, 40') lorsque celle-ci est raccordée à une autre conduite (100₂').

12. Système aérospatial selon une des revendications précédentes, le au moins un tuyau (100, 100', 100₂') comprenant en outre un ou plusieurs moyens de fixation (70, 70₂) pour relier le tuyau à une structure supplémentaire, les moyens de fixation étant respectivement fixés au tube extérieur (100) ou formés en un seul tenant avec celui-ci.

13. Système aérospatial selon une des revendications précédentes, comprenant un ensemble de tuyauterie (1000) comportant au moins deux tuyaux (100', 100₂') respectivement conformes à une des revendications précédentes, qui sont raccordés ou configurés pour être raccordés au niveau d'une bride respective (40', 40₂') de ceux-ci.

14. Système aérospatial selon une des revendications précédentes, dans lequel le système aérospatial est un lanceur ou un étage d'un lanceur à plusieurs étages.

15. Système aérospatial selon une des revendications précédentes, dans lequel le système aérospatial comprend au moins un moteur configuré pour être alimenté par un ergol cryogénique alimenté à travers le au moins un tuyau.
